# EUROPÄISCHE PATENTSCHRIFT

(11) **EP 2 532 568 B1**
(45) Veröffentlichungstag und Bekanntmachung des Hinweises auf die Patenterteilung: **09.04.2014**
(21) Anmeldenummer: 12170450.6
(22) Anmeldetag: 01.06.2012
(51) Int. Cl.: B62D 25/06, B62D 27/06, B60R 9/04, F16B 5/02

(54) **Vorrichtung zur Befestigung eines Anbauteils, zum Beispiel einer Reling, an einer Fahrzeugkarosserie**
Device to attach a component, e.g. a railing, to a vehicle body.
Dispositif de fixation d'un composant, par exemple d'une rambarde, sur une carrosserie de véhicule

(30) Priorität: 10.06.2011 DE 102011051013
(43) Veröffentlichungstag der Anmeldung: 12.12.2012
(73) Patentinhaber: JAC Products Europe GmbH, 42285 Wuppertal (DE)
(72) Erfinder: Adamo, Filippo, 42289 Wuppertal (DE); Rothstein, Reinhold, 42279 Wuppertal (DE); Meiß, Ander, 42659 Solingen (DE)
(74) Vertreter: Christophersen, Ulrich Rudolf

(56) Entgegenhaltungen:
- EP-A1- 2 113 421
- EP-A2- 2 277 742
- DE-U1-202004 018 079
- DE-U1-202010 002 447

## Beschreibung

Die Erfindung betrifft eine Vorrichtung zur Befestigung eines sich von außen gegenüber dem Karosserieaußenblech einer Fahrzeugkarosserie abstützenden Anbauteils an einer im Bereich unterhalb des Außenblechs verlaufenden Karosseriestruktur, wobei das Außenblech und die Karosserieaußenstruktur mit zueinander fluchtenden Öffnungen versehen sind, mit
- einem drehfest in dem Anbauteil sitzenden, ein- oder mehrteilig ausgebildeten Gewindeelement, welches sich mit einem Zapfenabschnitt durch die Öffnung in dem Außenblech hindurch bis in den Bereich zwischen Außenblech und Karosseriestruktur hinein erstreckt,
- einer mit dem Gewindeelement in einer Gewindeverbindung stehenden Schraubhülse, an der, dem Anbauteil abgewandt, eine Stützfläche zur Anlage gegen die Karosseriestruktur ausgebildet ist,
- einem zentral durch das Gewindeelement und die Schraubhülse hindurchführenden, mindestens ein Gewinde aufweisenden Schraubbolzen, der in Bezug auf das Anbauteil verdrehbar ist, mit einem Ende aus der Öffnung in der Karosseriestruktur herausgeführt ist, und dort zur Anlage gegen die Karosseriestruktur mit einer Mutter versehen ist,
- einem zwischen dem Schraubbolzen und der Schraubhülse angeordneten, mit begrenztem Drehmoment arbeitenden Mitnehmer.

Da Außenbleche von Fahrzeugkarosserien zu dünnwandig sind, um eine hinreichende Stabilität für die Befestigung von Anbauteilen wie z. B. einer Dachreling zu bieten, erfolgt die Befestigung derartiger Anbauteile vorzugsweise in solchen Karosseriebereichen, in denen sich unterhalb des Außenblechs verstärkende Karosseriestrukturen wie z. B. Rahmen, Dachflansche oder Spiegel befinden. Die Anbauteile stützen sich zwar außen auf dem Karosserieblech ab, sie sind jedoch an der weiter fahrzeuginnen angeordneten, deutlich steiferen Karosseriestruktur verankert.

Produktionstechnisch bedingt kann der Abstand zwischen dem Außenblech und dieser Struktur Schwankungen aufweisen. Daher sind bereits Befestigungsanordnungen bekannt, die gewisse Toleranzen des Abstandes zwischen Außenblech und der weiter fahrzeuginnen angeordneten Struktur ausgleichen können, zum Beispiel aus der EP 2 113 421 A1 oder der DE 20 2004 018 079 U1. Zur sicheren Befestigung des Anbauteils wird dieses zunächst mit einem hülsenförmigen Gewindeelement versehen, welches sich durch eine Öffnung in dem Außenblech hindurchstecken, und mit dem Anbauteil verbinden lässt. Zum Ausgleich der produktionstechnisch bedingten Toleranzen zwischen Außenblech und Karosseriestruktur dient eine Schraubhülse, die sich aus dem Gewindeelement herausschrauben lässt, bis die Schraubhülse von fahrzeugaußen her an der Karosseriestruktur anliegt. Ist diese vorläufige Montageposition erreicht, wird von oben, d.h. von fahrzeugaußen her, ein Schraubbolzen hindurchgesteckt, von unten her eine Gewindemutter darauf aufgeschraubt, und diese schließlich angezogen. Diese Art der Montage erfordert bis zur sicheren Befestigung des Anbauteils mehrere Handgriffe und vor allem Handgriffe, die von beiden Seiten, also von fahrzeuginnen und von fahrzeugaußen her, zu erfolgen haben.

Eine Befestigungsanordnung mit den Merkmalen des Oberbegriffs ist aus der DE 20 2010 002 447 U1 bekannt. Auch diese arbeitet zum Ausgleich der produktionstechnisch bedingten Toleranzen zwischen Außenblech und Karosseriestruktur mit einer Schraubhülse, die sich aus einem Gewindeelement herausschrauben lässt. Ausgehend von einer vorläufigen Montageposition wird von fahrzeugaußen her ein Schraubbolzen eingeführt, der mit seinem nach fahrzeuginnen weisenden Gewindeabschnitt in eine Gewindemutter eingreift, die drehfest in einem an der Karosseriestruktur befestigten Käfig sitzt. Auf diese Weise sind keine Handgriffe von beiden Seiten, also von fahrzeuginnen und von fahrzeugaußen her, erforderlich. Allerdings erfordert die Montage von fahrzeugaußen her ein nach außen offenes oder zu öffnendes Anbauteil und insbesondere Relingprofil. Häufig ist jedoch ein nach außen offenes Relingprofil aus ästhetischen Gründen unerwünscht.

Der Erfindung liegt die Aufgabe zugrunde, mit einer montagetechnisch besonders einfach durchführbaren Befestigung eine von den Karosserietoleranzen unabhängige Fixierung des Anbauteils an der Fahrzeugkarosserie zu erzielen.

Zur Lösung dieser Aufgabe wird bei einer Vorrichtung der eingangs genannten Art vorgeschlagen, dass die Gewindeverbindung zwischen Schraubhülse und Gewindeelement gegenläufig zu dem Gewinde des Schraubbolzens ausgebildet ist, dass das Gewinde des Schraubbolzens an dessen der Mutter abgewandtem Ende ausgebildet ist, und dass das Gewinde in das Gewindeelement, in einen zu dem Gewindeelement drehfesten Gewindestein, oder in ein Innengewinde des Anbauteils eingreift.

Erreicht wird auf diese Weise eine montagetechnisch besonders einfache und gleichwohl von den Karosserietoleranzen unabhängige Befestigung des Anbauteils an der Fahrzeugkarosserie.

Mit einer Ausgestaltung wird vorgeschlagen, dass der Mitnehmer als ein Reibelement ausgebildet ist, welches den Schraubbolzen ringförmig umgibt. Vorzugsweise stützt sich hierbei der Mitnehmer radial gegen einen zylindrisch gestalteten Mantelabschnitt des Schraubbolzens ab.

Mit einer weiteren Ausgestaltung der Befestigungsvorrichtung wird vorgeschlagen, dass an dem Gewindeelement einstückig ein radial erweiterter Flansch ausgebildet ist, der sich einerseits auf dem Außen blech, und andererseits gegen das Anbauteil abstützt. Von zusätzlichem Vorteil ist, wenn der Flansch über seinen gesamten Umfang von einer zwischen Außenblech und Anbauteil angeordneten Dichtung umschlossen ist.

Die Montage der Vorrichtung lässt sich zusätzlich vereinfachen, wenn zum Zwecke einer vorläufigen Positionierung Federelemente um das Gewindeelement herum angeordnet sind, und das radiale Maß der Federelemente in ausgefedertem Zustand größer als das entsprechende radiale Maß der Öffnung des Außenblechs ist, wobei an den Federelementen ausgebildete Sperrflächen gegen die Innenseite des Außenblechs gerichtet sind.

In der Praxis gibt es Karosserietoleranzen nicht nur hinsichtlich des vertikalen Abstandes zwischen dem Außenblech und der darunter angeordneten Karosseriestruktur, sondern das Außenblech verläuft auch nicht immer parallel zu dieser Karosseriestruktur. In einem solchen Fall kann es sinnvoll sein, die Längsabstützung des fahrzeugäußeren Endes des Schraubbolzens als eine sphärische Lagerung unter Einsatz einer Kugelscheibe / Kugelpfanne-Paarung auszubilden. Mögliche Ausgestaltungen hierzu sind in der DE 195 42 109 C2 beschrieben.

Ein Ausführungsbeispiel einer Befestigungsanordnung für Anbauteile wird im Folgenden anhand der zugehörigen Zeichnungen beschrieben. Darin zeigen:
- Fig. 1: einen Schnitt durch ein zur Befestigung an einer Fahrzeugkarosserie vorbereitetes, von oben her an die Fahrzeugkarosserie angesetztes Anbauteil;
- Fig. 2: in einem Zwischenschritt das Anbauteil nach dem Aufschrauben einer Gewindemutter auf einen Schraubbolzen und
- Fig. 3: das Anbauteil nach seiner endgültigen Befestigung an der Fahrzeugkarosserie.

In den Zeichnungen ist ein als Profil gestaltetes Anbauteil zur Befestigung außen an einer Fahrzeugkarosserie dargestellt. Derartige Profile werden als Dachreling bezeichnet, wenn sie sich auf der Dachhaut bzw. dem Dachblech 1 des Fahrzeugdachs abstützen. Häufig befindet sich zwischen der Unterseite des in den Figuren im Querschnitt wiedergegebenen Profils 2 und dem Außenblech 1 eine Dichtung 11.

Zur Befestigung von z. B. Gepäckträgern, Skiträgern, Fahrradträgern etc. kann das Profil 2 Ausnehmungen oder Hinterschneidungen 2a aufweisen, in die Befestigungselemente des jeweiligen Trägersystems, z. B. eines Fahrradträgers oder eines Skiträgers, form- oder reibschlüssig eingreifen, um so das Trägersystem sicher mit dem Fahrzeug zu verbinden.

Die Basis 12 des Profils 2 ist mit Öffnungen 12a für im Folgenden noch im Einzelnen beschriebene Befestigungselemente versehen. Ist das Anbauteil 2 ein langgestrecktes Profil, können über die Länge des Profils betrachtet mehrere Öffnungen 12a für Befestigungsanordnungen vorgesehen sein, um so das Profil über dessen gesamte Länge definiert zum Außenblech 1 der Karosserie zu positionieren. Zwischen der Basis 12 des Profils und der Außenseite 6 des Karosserieaußenblechs 1 kann die komprimierbare Dichtung 11 angeordnet sein.

Zur Verankerung des Anbauteils 2 wird nicht alleine das dünnwandige Außenblech 1 herangezogen, sondern es wird hierzu die erhöhte Steifigkeit einer unterhalb des Außenblechs 1 verlaufenden Karosseriestruktur 3 ausgenutzt. Die Karosseriestruktur 3 ist häufig ein geschweißtes oder gelötetes Profil mit entsprechend hoher Festigkeit. Der Abstand A zwischen Außenblech 1 und Karosseriestruktur 3 ist jedoch produktionstechnisch bedingt nicht stets gleich, sondern weist gewisse Schwankungen auf. Daher ist bei der Verankerung des Anbauteils 2 gegenüber der unterhalb angeordneten Karosseriestruktur 3 ein Toleranzausgleich erforderlich. Die im Folgenden beschriebene Anordnung vermag einen solchen Toleranzausgleich auf montagetechnisch einfache Art durchzuführen.

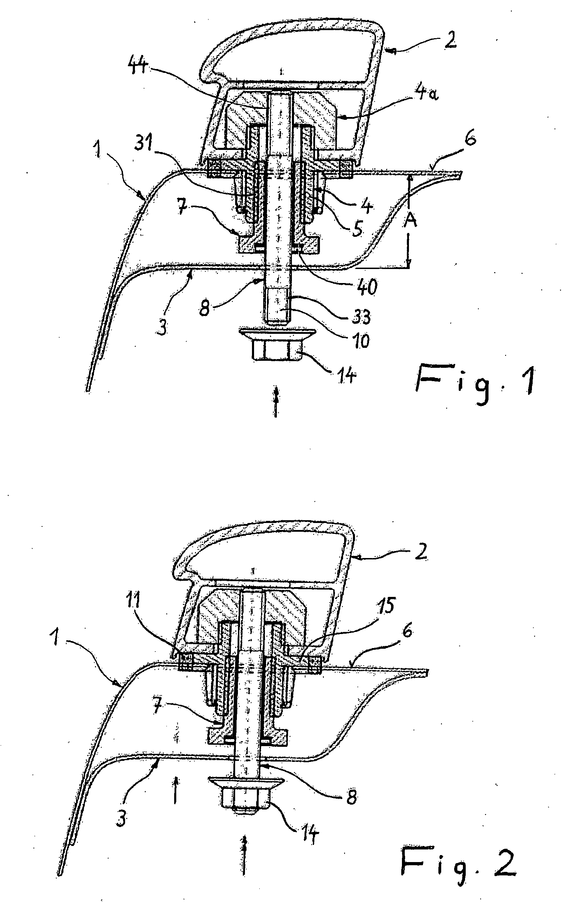

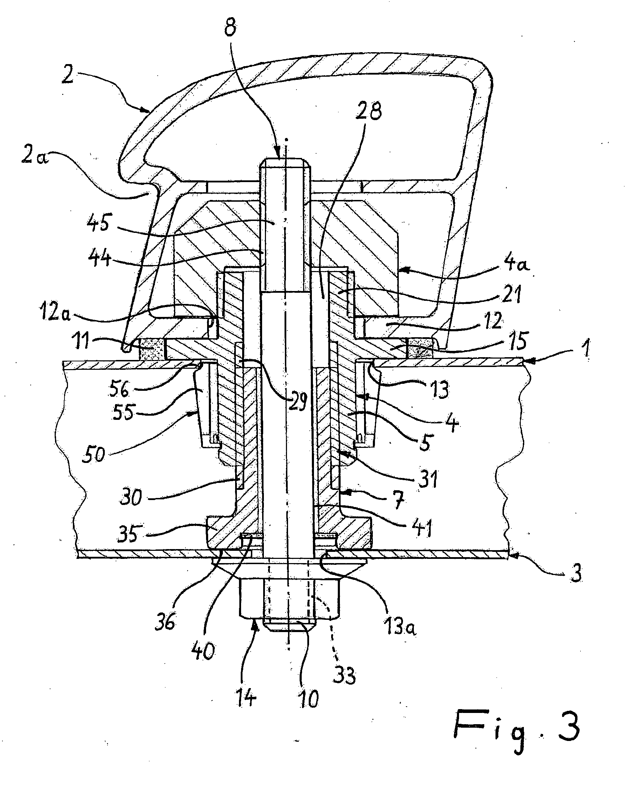

Die in Fig. 1 und Fig. 2 in einem Zwischenstadium, und in Fig. 3 nach Abschluss der Montage dargestellte Befestigungsvorrichtung setzt sich zusammen aus einem hier zweiteiligen Gewindeelement 4, einer Schraubhülse 7, einem Schraubbolzen 8 sowie einer auf dem fahrzeuginnere Ende 10 des Schraubbolzens 8 durch Aufschrauben befestigbaren Gewindemutter 14. Die Gewindemutter 14 dient als im Vergleich zum Bolzendurchmesser radial erweitertes Antriebsmittel, und ist hierzu mit Schlüsselflächen für ein Schraubwerkzeug versehen.

Das Gewindeelement 4 ist in geeigneter Weise in dem Anbauteil 2 befestigt, indem z. B. an einem Flansch 15 des Gewindeelements 4 angeformte Rastelemente in Öffnungen oder Ausnehmungen in der Basis 12 des Anbauteils 2 eingreifen.

Das Gewindeelement 4 weist in Längsrichtung im Wesentlichen zwei Längsabschnitte auf. Ein in einen Gewindestein 4a, welcher zusammen mit dem übrigen Gewindeelement 4 eine technisch-funktionale Einheit bildet, drehfest eingreifender Gewindeabschnitt 21 mit einem daran ausgebildeten Außengewinde stellt den ersten Abschnitt dar. Ein zweiter Abschnitt 5 hat die Gestalt einer zu der Karosserie hin vorstehenden Zapfens. Zwischen dem Gewindeabschnitt 21 und diesem Zapfenabschnitt 5 ist das Gewindeelement 4 zu dem Flansch 15 radial erweitert. Der Flansch 15 stützt sich von unten her an der Basis 12 und zugleich von oben her auf dem Außenblech 1 ab.

Nach der Montage an der Fahrzeugkarosserie durchragt der Zapfenabschnitt 5 des Gewindeelements 4 eine in dem Außenblech 1 vorhandene Öffnung 13. Zu dieser Öffnung 13 ist koaxial, d. h. fluchtend, eine weitere, vorzugsweise kleinere Öffnung 13a in der unterhalb angeordneten Karosseriestruktur 3 vorhanden.

Mit dem Gewindeabschnitt 21 steht der Gewindestein 4a in einer fest angezogenen Gewindeverbindung. Der Gewindestein 4a stützt sich mit seiner Unterseite auf der Basis 12 des Profils ab. Ist das Gewindeelement 4 in Bezug auf den Gewindestein 4a dauerhaft fest angezogen, wird ein einen geschlossenen Ring bildender Bereich der Basis 12 zwischen dem Flansch 15 des Gewindeelementes 4 und der Unterseite des Gewindesteins 4a fest eingespannt.

Der Gewindestein 4a ist gegen Verdrehen gesichert. Dies wird erreicht, indem sich ein Rand des Gewindesteins 4a gegen eine unmittelbar benachbarte Innenwandung des Längskanals in dem Anbauteil 2 abstützt, und sich daher der Gewindestein 4a beim Einschrauben des Gewindeelementes 4 nicht zu drehen vermag. Der Gewindestein 4a kann auch als Gewindemutter ausgebildet sein.

Bei alternativen, auf der Zeichnung nicht dargestellten Varianten kann das Gewindeelement 4 einteilig sein indem es, unter Verzicht auf den separaten Gewindestein, unmittelbar in das Anbauteil 2 fest eingeschraubt ist, z. B. im Fall einer aus Guss oder einem anderen Vollmaterial bestehende Relingstütze. Bei einer anderen Variante kann das Gewindeelement 4 einschließlich des Zapfenabschnitts 5 einstückiger Bestandteil des Anbauteils 2 selbst sein. Entscheidend ist allein, dass sich an dem solchermaßen ausgebildeten Gewindeelement 4 der Schraubbolzen 8 mit seinem fahrzeugäußeren Ende 45 direkt oder indirekt abzustützen vermag, um so ein Widerlager zu haben.

Das Gewindeelement 4 ist zentral mit einer durchgehenden Öffnung 28 versehen, wodurch das Gewindeelement 4 insgesamt hülsenförmig gestaltet ist. Die Öffnung 28 ist zumindest auf einem Teil ihrer Länge als ein Innengewinde 29 gestaltet, welches in ein an der Schraubhülse 7 ausgebildetes Außengewinde 30 eingreift. Innengewinde 29 und Außengewinde 30 bilden gemeinsam eine Gewindeverbindung 31.

Durch das Gewindeelement 4 und die Schraubhülse 7 hindurch führt der langgestreckte Schraubbolzen 8. Dieser ragt mit seinem dem Anbauteil 2 abgewandten Ende 10 aus der Öffnung 13a in der Karosseriestruktur 3 nach unten heraus. An diesem fahrzeuginneren Ende 10 ist der Schraubbolzen 8 mit einem relativ kurzen Gewinde 33 versehen, auf welches die Mutter 14 aufschraubbar ist. Nach Abschluss der Montage, wie in Fig. 3 dargestellt, ist der Schraubbolzen mittels der gegenüber der Karosseriestruktur 3 drehbar angeordneten Gewindemutter 14 von fahrzeuginnen her gegen die stabile Karosseriestruktur 3 abgestützt. Mit seinem anderen, fahrzeugäußeren Ende 45 ist der Schraubbolzen 8 an dem Gewindeelement 4 abgestützt, und zwar direkt oder, wie auf den Zeichnungen dargestellt, indirekt über den Gewindestein 4a.

Die Schraubhülse 7 weist einen buchsen- oder hülsenförmigen Längsabschnitt mit dem Außengewinde 30 sowie, außerhalb des Zapfenabschnitts 5, einen radial erweiterten Flansch 35 auf. An diesem ist eine Stützfläche 36 ausgebildet, mit der sich die Schraubhülse 7 nach der Fertigmontage von fahrzeugaußen her gegen die Karosseriestruktur 3 abstützt.

Die Fig. 1 zeigt den Beginn der Montage, wobei die Baueinheit bestehend aus dem Anbauteil 2, dem zweiteiligen Gewindeelement 4, 4a, der Schraubhülse 7 sowie dem Schraubbolzen 8 von fahrzeugaußen her durch die Öffnung 13 des Außenblechs 1 hindurchgeschoben wurde, bis sich das Anbauteil 2 unter Zwischenlage der Dichtung 11 gegen die Außenseite 6 des Karosserieaußenblechs abstützt. In diesem Stadium wird eine vorläufige Positionierung bzw. Fixierung dieser Baueinheit erreicht, indem zu der Baueinheit ferner eine außen auf dem Zapfenabschnitt 5 angeordnete Hülse 50 gehört, die sich mittels daran ausgebildeter, federnder Elemente 55 spielfrei von innen her gegen das Außenblech 1 abzustützen vermag. Auf diese Weise wird erreicht, dass nach dem Einsetzen der Baueinheit diese zunächst ausreichend am Außenblech 1 fixiert ist, wobei diese Fixierung zumindest ausreicht, um nach dem Loslassen der Baueinheit deren Herausfallen aus der Öffnung 13 oder auch nur deren Verkanten innerhalb der Öffnung 13 zu verhindern. Die weiteren Montageschritte können dann gesondert und nachträglich durchgeführt werden, was den Montageprozess erheblich vereinfacht.

Die das Verklippsen nach der Vorpositionierung übernehmende Hülse 50 setzt sich einstückig aus zwei Längsabschnitten zusammen. Der erste Längsabschnitt weist die durch Längsschlitze unterteilten Federelemente 55 auf, die zu dem Zapfen 5 hin radial einfederbar sind. Außenseitig an den Federelementen 55 sind Sperrflächen 56 ausgebildet, die nach der Vorfixierung gegen die Öffnung 13 des Außenblechs 1 gerichtet sind. Für ein symmetrisches Federverhalten sind die Federelemente 55 gleichmäßig über den Umfang der Hülse 50 verteilt angeordnet. Die Hülse 50 besteht aus federelastischem Material und vorzugsweise aus Kunststoff. Die Hülse 50 erstreckt sich nur soweit nach fahrzeuginnen, dass sie einen Abstand zur Karosseriestruktur 3 aufweist und sich nicht durch die Öffnung 13a der Karosseriestruktur hindurch erstreckt. Durch die Öffnung 13a hindurch erstreckt sich vielmehr ausschließlich der Schraubbolzen 8.

Die Sperrflächen 56 sind als Schrägen gestaltet. Diese Clipverbindung mit schräg gestalteten Sperrflächen 56 ist bei ausreichender Zugkraft wieder lösbar, wenn eine deutliche Zugkraft ausgeübt wird. Auf ihrem unteren Längsabschnitt weist die Hülse 50 einen geschlossenen Umfang auf. Mit diesem Längsabschnitt ist die Hülse 50 in axialer Richtung an dem Zapfenabschnitt 5 des Gewindeelementes 4 festgelegt.

Beim Aufsetzen der Baueinheit auf die Karosserie werden die Laschen 55 beim Hindurchtreten durch die Öffnung 13 nach innen gedrückt, wodurch sie radial nach innen einfedern. Ist die Position nach Fig. 1 erreicht, weiten sich die Laschen 55 selbsttätig wieder nach außen auf, wodurch die Sperrflächen 56 die Verriegelung an der Kante der Öffnung 13 bewirken. Es kommt zu einer Komprimierung der Dichtung 11 mit der Folge eines spielfreien Sitzes des Anbauteils 2 auf dem Außenblech 1.

Wie in Fig. 2 wiedergegeben, wird anschließend auf das fahrzeuginnere Ende 10 des Schraubbolzens 8 die Gewindemutter 14 aufgesetzt und hierbei soweit gedreht, bis das obere Ende des Gewindes 33 erreicht ist und ein weiteres Drehen verhindert. Jedes anschließende weitere Drehen der so drehfest mit dem Bolzen 8 verbundenen Gewindemutter 14 führt dann zum Mitdrehen des Schraubbolzens 8.

Am seinem anderen Ende 45 ist der Schraubbolzen 8 mit einem Gewinde 44 in den Gewindestein 4a eingeschraubt, so dass der Bolzen 8 dort ein Widerlager findet.

Innen an der Schraubhülse 7 ist ein Mitnehmer 40 angeordnet. Dieser liegt mit seinem Innenrand radial an einem glattzylindrischen Mantelabschnitt 41 des Schraubbolzens 8 an und arbeitet mit einem begrenzten übertragbaren Drehmoment, d. h. bei einem Verdrehen des Schraubbolzens 8 nimmt der Mitnehmer 40 die Schraubhülse 7 mit, so dass auch diese dreht. Das so übertragbare Drehmoment ist begrenzt, da der Mitnehmer 40 unter Aufrechterhalten einer gewissen Andrückkraft an der Schraubhülse 7 und / oder an dem glattzylindrischen Schaftabschnitt 41 des Schraubbolzens 8 anliegt mit der Folge eines übertragbaren Reibmoments in Umfangsrichtung, dessen Größe von der Andrückkraft, aber auch von der jeweiligen Materialpaarung abhängt.

Im Rahmen der Erfindung muss der Mitnehmer 40 nicht reibschlüssig arbeiten. Ebenso kann der Mitnehmer 40 als kraftschlüssig arbeitendes Element oder auch als formschlüssiges, sich bei Überschreiten eines bestimmten Drehmomentes verformendes oder nachgebendes Element gestaltet sein.

Die Gewindeverbindung 31 zwischen der Schraubhülse 7 und dem Gewindeelement 4 ist gegenläufig zu dem Gewinde 44 zwischen dem Ende 45 des Schraubbolzens 8 und dem Gewindestein 4a, und gegenläufig zu dem Gewinde 33 zwischen dem Schraubbolzen 8 und der Gewindemutter 14. Dabei sind zwei Fälle möglich:
Führt eine Rechtsdrehung am Gewinde 44 bzw. am Gewinde 33 zu einem Verkürzen der wirksamen Länge der Verschraubung, wie dies bei handelsüblichen Schrauben mit Rechtsgewinde üblich ist, so muss die Gewindeverbindung 31 ein Linksgewinde sein mit der Folge, dass sich die vom Schraubbolzen 8 mitgenommene Schraubhülse 7 aus dem Gewindeelement 4 nach unten herausschraubt.
Führt hingegen eine Linksdrehung am Gewinde 44 bzw. am Gewinde 33 zu einem Verkürzen der wirksamen Länge der Verschraubung, so muss die Gewindeverbindung 31 ein Rechtsgewinde sein, damit sich die vom Schraubbolzen 8 mitgenommene Schraubhülse 7 aus dem Gewindeelement 4 nach unten herausschraubt.

Diese Gegenläufigkeit der Gewindeverbindung 31 führt zu folgender Wirkung: Nachdem die das Antriebsmittel bildende Mutter 14 aufgesetzt und durch Schrauben bis zum Gewindeende auf dem kurzen Gewinde 33 befestigt wurde, führt jedes weitere Drehen der Mutter 14 zur Mitnahme und damit einem Drehen auch des Schraubbolzens 8. Dieser dreht über den Mitnehmer 40 auch die Schraubhülse 7, wodurch sich die Schraubhülse 7 aufgrund der gegensinnigen Gewindeverbindung 31 aus dem Gewindeelement 4 herausschraubt. Dieses Herausschrauben ist beendet, sobald die Schraubhülse 7 mit der Stützfläche 36 an der Karosseriestruktur 3 anliegt. Wegen des damit ansteigenden Drehmoments kommt es von diesem Zeitpunkt an zu einem Durchdrehen an dem Mitnehmer 40. Jedes anschließende weitere Drehen des Schraubbolzens 8 in unveränderter Drehrichtung führt über das an dem Schraubbolzen 8 ausgebildete Gewinde 44 nur noch zu einem Verkürzen der wirksamen Länge der Verschraubung. Sobald die unten am Schraubbolzen 8 befestigte Mutter 14 von unten gegen die Karosseriestruktur 3 stößt, kommt es zu einer Zugkraft in der Verschraubung, wobei die Karosseriestruktur 3 zwischen der Schraubhülse 7 und der Mutter 14 eingespannt wird. Diese Einspannung führt zur abschließenden Fixierung des Anbauteils 2, ohne dass es zu Stauchkräften zwischen Außenfläche 1 und Karosseriestruktur 3 kommt. Denn solche Stauchkräfte hätten eine Verringerung des Abstandes A zur Folge.

Montagetechnisch ist von besonderem Vorteil, dass nur wenige Handgriffe erforderlich sind, und dass eine Falschmontage nahezu ausgeschlossen ist. Nach der Vorpositionierung des Anbauteils einschließlich des daran bereits vorhandenen Schraubbolzens 8 muss der Monteur nur noch die das Antriebsmittel 14 darstellende Gewindemutter aufsetzen und diese mit ein- und demselben Werkzeug drehen bzw., in der letzten Phase, anziehen. Weitere Schritte oder Handgriffe, insbesondere von der anderen Seite der Fahrzeugkarosserie her, sind nicht notwendig.

In der Praxis verläuft das Außenblech 1 nicht immer parallel zu der Karosseriestruktur 3 unterhalb. In einem solchen Fall kann es sinnvoll sein, die Längsabstützung des fahrzeugäußeren Endes 45 des Schraubbolzens 8 als eine Kugelscheibe / Kugelpfanne-Paarung auszubilden. Möglichkeiten hierzu sind in der DE 195 42 109 C2 beschrieben.

### Bezugszeichenliste

- 1: Außenblech
- 2: Anbauteil, Profil
- 2a: Hinterschneidung
- 3: Karosseriestruktur
- 4: Gewindeelement
- 4a: Gewindestein
- 5: Zapfenabschnitt
- 6: Außenseite
- 7: Schraubhülse
- 8: Schraubbolzen
- 10: Ende des Schraubbolzens
- 11: Dichtung
- 12: Basis des Profils
- 12a: Öffnung
- 13: Öffnung
- 13a: Öffnung
- 14: Antriebsmittel, Gewindemutter
- 15: Flansch
- 21: Gewindeabschnitt
- 28: Öffnung
- 29: Innengewinde
- 30: Außengewinde
- 31: Gewindeverbindung
- 33: Gewinde
- 35: Flansch
- 36: Stützfläche
- 40: Mitnehmer
- 41: Mantelabschnitt, Schaftabschnitt
- 44: Gewinde
- 45: Ende des Schraubbolzens
- 50: Hülse
- 55: Federelement, Lasche
- 56: Sperrfläche

- A: Abstand

## Patentansprüche

1. Vorrichtung zur Befestigung eines sich von außen gegenüber dem Karosserieaußenblech (1) einer Fahrzeugkarosserie abstützenden Anbauteils (2) an einer im Bereich unterhalb des Außenblechs (1) verlaufenden Karosseriestruktur (3), wobei das Außenblech (1) und die Karosserieaußenstruktur (3) mit zueinander fluchtenden Öffnungen (13 bzw. 13a) versehen sind, mit
- einem drehfest in dem Anbauteil (2) sitzenden, ein- oder mehrteilig ausgebildeten Gewindeelement (4), welches sich mit einem Zapfenabschnitt (5) durch die Öffnung (13) in dem Außenblech (1) hindurch bis in den Bereich zwischen Außenblech (1) und Karosseriestruktur (3) hinein erstreckt,
- einer mit dem Gewindeelement (4) in einer Gewindeverbindung (31) stehenden Schraubhülse (7), an der, dem Anbauteil (2) abgewandt, eine Stützfläche (36) zur Anlage gegen die Karosseriestruktur (3) ausgebildet ist,
- einem zentral durch das Gewindeelement (4) und die Schraubhülse (7) hindurchführenden, mindestens ein Gewinde (44) aufweisenden Schraubbolzen (8), der in Bezug auf das Anbauteil (2) verdrehbar ist, mit einem Ende (10) aus der Öffnung (13a) in der Karosseriestruktur (3) herausgeführt ist, und dort zur Anlage gegen die Karosseriestruktur (3) mit einer Mutter (14) versehen ist,
- einem zwischen dem Schraubbolzen (8) und der Schraubhülse (7) angeordneten, mit begrenztem Drehmoment arbeitenden Mitnehmer (40),
**dadurch gekennzeichnet, dass** die Gewindeverbindung (31) zwischen Schraubhülse (7) und Gewindeelement (4) gegenläufig zu dem Gewinde (44) des Schraubbolzens (8) ausgebildet ist, dass das Gewinde (44) des Schraubbolzens (8) an dessen der Mutter (14) abgewandtem Ende (45) ausgebildet ist, und dass das Gewinde (44) in das Gewindeelement (4), in einen zu dem Gewindeelement (4) drehfesten Gewindestein (4a), oder in ein Innengewinde des Anbauteils (2) eingreift.

2. Vorrichtung nach Anspruch 1, **dadurch gekennzeichnet, dass** der Mitnehmer (40) als ein Reibelement ausgebildet ist, welches den Schraubbolzen (8) ringförmig umgibt.

3. Vorrichtung nach Anspruch 1 oder 2, **dadurch gekennzeichnet, dass** der Mitnehmer (40) radial gegen einen Mantelabschnitt (41) des Schraubbolzens (8) anliegt.

4. Vorrichtung nach einem der Ansprüche 1 - 3, **dadurch gekennzeichnet dass** die Mutter (14) mit dem aus der Öffnung (13a) in der Karosseriestruktur (3) herausführenden Ende (10) des Schraubbolzens (8) drehfest verbindbar ist.

5. Vorrichtung nach einem der Ansprüche 1 - 4, **dadurch gekennzeichnet, dass** die Mutter (14) drehbar gegen die Karosseriestruktur (3) abgestützt ist.

6. Vorrichtung nach einem der vorangehenden Ansprüche, **dadurch gekennzeichnet, dass** an dem Gewindeelement (4) einstückig ein radial erweiterter Flansch (15) ausgebildet ist, der sich einerseits auf dem Außenblech (1), und andererseits gegen das Anbauteil (2) abstützt.

7. Vorrichtung nach Anspruch 6, **dadurch gekennzeichnet, dass** der Flansch (15) über seinen gesamten Umfang von einer zwischen Außenblech (1) und Anbauteil (2) angeordneten Dichtung (11) umschlossen ist.

8. Vorrichtung nach einem der vorangehenden Ansprüche, **gekennzeichnet durch** um das Gewindeelement (4) herum angeordnete Federelemente (55), deren radiales Maß in ausgefedertem Zustand größer als das entsprechende radiale Maß der Öffnung (13) des Außenblechs (1) ist, wobei an den Federelementen (55) ausgebildete Sperrflächen (56) gegen die Innenseite des Außenblechs (1) gerichtet sind.

9. Vorrichtung nach einem der vorangehenden Ansprüche, **dadurch gekennzeichnet, dass** die Längsabstützung des fahrzeugäußeren Endes (45) des Schraubbolzens (8) als eine Kugelscheibe / Kugelpfanne-Paarung ausgebildet ist.

## Claims

1. An apparatus for fastening an attachment part (2) - supported from the outside with respect to the outer skin (1) of a vehicle body - on a body structure (3) extending in the region below the outer skin (1), wherein the outer skin (1) and the outer structure (3) of the body are provided with openings (13 and 13a respectively) in alignment with each other, with
- a thread element (4) which is mounted in a rotationally fixed manner in the attachment part (2) and is formed in one or more parts and which extends with a pin portion (5) through the opening (13) in the outer skin (1) into the region between the outer skin (1) and the body structure (3),
- a threaded sleeve (7) which is connected in a thread connection (31) to the thread element (4) and on which a support face (36) for abutting against the body structure (3) is formed facing away from the attachment part (2),
- a threaded pin (8) which extends centrally through the thread element (4) and the threaded sleeve (7) and has at least one thread (44) and which is rotatable with respect to the attachment part (2), extends with one end (10) out of the opening (13a) in the body structure (3), and is provided with a nut (14) there for abutting against the body structure (3),
- an entrainment means (40) arranged between the threaded pin (8) and the threaded sleeve (7) and operating with a limited torque,
**characterized in that** the thread connection (31) between the threaded sleeve (7) and the thread element (4) is formed in the opposite direction to the thread (44) of the threaded pin (8), the thread (44) of the threaded pin (8) is formed on the end (45) thereof facing away from the nut (14), and the thread (44) engages in the thread element (4), in a thread block (4a) rotationally fixed with respect to the thread element (4), or in an inner thread of the attachment part (2).

2. An apparatus according to Claim 1, **characterized in that** the entrainment means (40) is designed in the form of a friction element which surrounds the threaded pin (8) in an annular manner.

3. An apparatus according to Claim 1 or 2, **characterized in that** the entrainment means (40) abuts radially against a cover portion (41) of the threaded pin (8).

4. An apparatus according to any one of Claims 1 to 3, **characterized in that** the nut (14) is capable of being connected in a rotationally fixed manner to the end (10) of the threaded pin (8) extending out of the opening (13a) in the body structure (3).

5. An apparatus according to any one of Claims 1 to 4, **characterized in that** the nut (14) is supported against the body structure (3) so as to be rotatable.

6. An apparatus according to any one of the preceding Claims, **characterized in that** a radially widened flange (15), which is supported on the outer skin (1) on one side and against the attachment part (2) on the other side, is formed in one piece on the thread element (4).

7. An apparatus according to Claim 6, **characterized in that** the flange (15) is surrounded over the whole of its periphery by a seal (11) situated between the outer skin (1) and the attachment part (2).

8. An apparatus according to any one of the preceding Claims, **characterized by** spring elements (55) which are arranged around the thread element (4) and the radial dimension of which is larger in the extended state than the corresponding radial dimension of the opening (13) of the outer skin (1), wherein blocking faces (56) formed on the spring elements (55) are directed towards the inside of the outer skin (1).

9. An apparatus according to any one of the preceding Claims, **characterized in that** the longitudinal support of the end (45) of the threaded pin (8) towards the outside of the vehicle is designed in the form of a ball-and-socket pair.

## Revendications

1. Dispositif de fixation d'une pièce rapportée (2) s'appuyant de l'extérieur contre la tôle extérieure (1) d'une carrosserie de véhicule, à une structure de carrosserie (3) se trouvant dans la zone en dessous de la tôle extérieure (1), la tôle extérieure (1) et la structure externe de la carrosserie (3) étant munies d'ouvertures (13 ou 13a) alignées entre elles, avec
- un élément fileté (4) logé de manière fixe en rotation dans la pièce rapportée (2) et constitué d'une seule ou de plusieurs pièces, qui s'étend, avec une section de pivot (5), à travers l'ouverture (13) dans la tôle extérieure (1) jusqu'à la zone entre la tôle extérieure (1) et la structure de la carrosserie (3),
- un manchon fileté (7) relié à l'aide d'une liaison filetée (31) avec l'élément fileté (4), sur lequel, à l'opposé de la pièce rapportée (2), une surface d'appui (36) est formée pour l'appui contre la structure de la carrosserie (3),
- une tige filetée (8) comprenant au moins un filetage (44) conduisant de manière centralisée à travers l'élément fileté (4) et le manchon fileté (7), qui tourne par rapport à la pièce rapportée (2), qui est guidée, avec une extrémité (10), hors de l'ouverture (13a) dans la structure de carrosserie (3) et est munie d'un écrou (14) pour un appui contre la structure de carrosserie (3),
- un taquet d'entraînement (40) disposé entre la tige filetée (8) et le manchon fileté (7) et fonctionnant avec un couple limité,
**caractérisé en ce que** la liaison filetée (31) entre le manchon fileté (7) et l'élément fileté (4) est conçue à contresens du filetage (44) de la tige filetée (8), **en ce que** le filetage (44) de la tige filetée (8) est formé au niveau de son extrémité (45) opposée à l'écrou (14) et **en ce que** le filetage (44) pénètre dans l'élément fileté (4), dans un écrou (4a) fixe en rotation par rapport à l'élément fileté (4) ou dans un filetage interne de la pièce rapportée (2).

2. Dispositif selon la revendication 1, **caractérisé en ce que** le taquet d'entraînement (40) est conçu comme un élément de friction qui entoure la tige filetée (8).

3. Dispositif selon la revendication 1 ou 2, **caractérisé en ce que** le taquet d'entraînement (40) s'appuie radialement contre une partie du revêtement (41) de la tige filetée (8).

4. Dispositif selon l'une des revendications 1 à 3, **caractérisé en ce que** l'écrou (14) peut être relié avec l'extrémité (10) de la tige filetée (8) conduisant hors de l'ouverture (13a) dans la structure de carrosserie (3).

5. Dispositif selon l'une des revendications 1 à 4, **caractérisé en ce que** l'écrou (14) est appuyé de manière rotative contre la structure de carrosserie (3).

6. Dispositif selon l'une des revendications précédentes, **caractérisé en ce que**, sur l'élément fileté (4), est formée une bride (15) élargie radialement d'une seule pièce, qui s'appuie d'une part sur la tôle extérieure (1) et d'autre part contre la pièce rapportée (2).

7. Dispositif selon la revendication 6, **caractérisé en ce que** la bride (15) est entourée, sur toute sa périphérie, par un joint d'étanchéité (11) disposé entre la tôle extérieure (1) et la pièce rapportée (2).

8. Dispositif selon l'une des revendications précédentes, **caractérisé par** des éléments élastiques (55) disposés autour de l'élément fileté (4), dont la cote radiale est supérieure, dans l'état déployé, que la cote radiale correspondante de l'ouverture (13) de la tôle extérieure (1), des surfaces de blocage (56) formées sur les éléments élastiques (55) sont orientées contre l'intérieur de la tôle extérieure (1).

9. Dispositif selon l'une des revendications précédentes, **caractérisé en ce que** l'appui longitudinal de l'extrémité (45), extérieure au véhicule, de la tige filetée (8) est conçu comme une paire rondelle sphérique / coussinet sphérique.
